(19)

Europäisches
Patentamt
European
Patent Office
Office européen
des brevets

(11) **EP 2 777 990 A1**

(12) **EUROPEAN PATENT APPLICATION**
published in accordance with Art. 153(4) EPC

(43) Date of publication:
**17.09.2014 Bulletin 2014/38**

(21) Application number: **12848071.2**

(22) Date of filing: **24.10.2012**

(51) Int Cl.:
***B60R 16/02*** *(2006.01)*     ***G01C 21/26*** *(2006.01)*

(86) International application number:
**PCT/JP2012/006824**

(87) International publication number:
**WO 2013/069221 (16.05.2013 Gazette 2013/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.11.2011   JP 2011244827**

(71) Applicant: **Panasonic Corporation
Osaka 571-8501 (JP)**

(72) Inventors:
• **SATO, Junichi
Osaka-shi, Osaka 540-6207 (JP)**
• **MORI, Toshiaki
Osaka-shi, Osaka 540-6207 (JP)**
• **NISHIMURA, Kenji
Osaka-shi, Osaka 540-6207 (JP)**
• **GOJYO, Azusa
Osaka-shi, Osaka 540-6207 (JP)**

(74) Representative: **Vigand, Philippe et al
Novagraaf International SA
3 chemin de l'Echo
1213 Onex Geneva (CH)**

(54) **INFORMATION DISPLAY PROCESSING DEVICE**

(57)     An information display processing device includes: an image input part which acquires a video signal outputted from an external terminal; an image detector which detects a to-be-highlighted image section from an image indicated by the video signal acquired by the image input part; an image processor which highlights the image section detected by the image detector; and an image display processor which performs processing so that the image processed by the image processor is displayed on a display device connected to the information display processing device.

*FIG. 1*

EP 2 777 990 A1

## Description

Technical Field

The present invention relates to an information display processing device which processes information in a connected external terminal to display the information on a display device provided separately from the external terminal.

Background Art

A technique in which an external terminal such as a cellular phone or a portable information terminal is connected to an on-vehicle information display device loaded into a car so that visual information from the external terminal is displayed on the on-vehicle information display device has been described in Patent Document 1. According to the technique of Patent Document 1, the external terminal generates a part or the whole of an image to be displayed on a display of the external terminal and transfers it to the on-vehicle information display device to display it. Incidentally, when the image to be displayed on the display of the external terminal is undesirable to the on-vehicle information display device, the external terminal generates an image to be appropriately displayed on the on-vehicle information display device and provides the image to the on-vehicle information display device.

Citation List

Patent Document

Patent Document 1: JP-T-2010-514604

Summary of Invention

Technical Problem

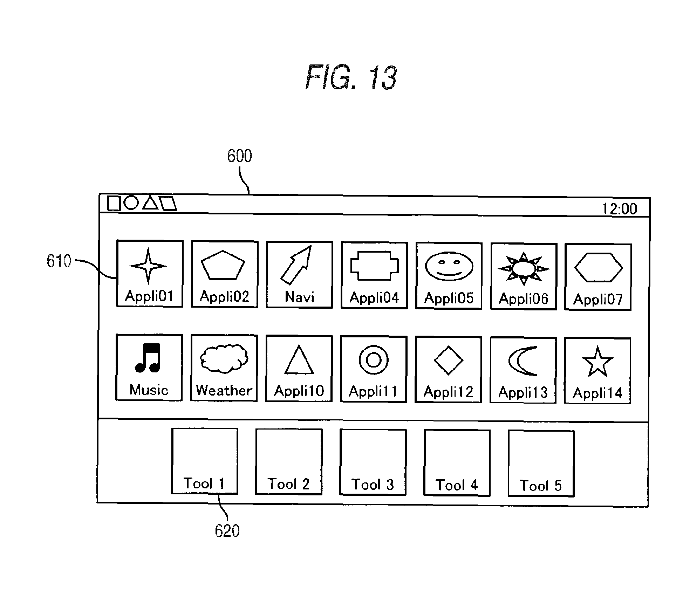

For display of information on the on-vehicle information display device, it is preferable that the information is displayed in a form easily viewable and easily understandable to a driver. However, as shown in Fig. 13, a menu screen or the like for selecting an application in the external terminal is not a screen which is easily viewable to the driver when the screen is displayed on the on-vehicle information display device as it is. Therefore, in order to display a menu screen in a form easily viewable and easily understandable to the driver on the on-vehicle information display device, the external terminal needs to process information forming the menu screen in the external terminal to reconfigure the menu screen and provide the reconfigured menu screen to the on-vehicle information display device. However, it is undesirable for the external terminal to perform such a process of reconfiguring the menu screen because the load imposed on the external terminal will increase.

An object of the invention is to provide an information display processing device which performs processing so that information in an external terminal is displayed in a display form appropriate to a display device provided separately from the external terminal.

Solution to Problem

The invention provides an information display processing device including: an image input part which acquires a video signal outputted from an external terminal; an image detector which detects an image section to be highlighted from an image indicated by the video signal acquired by the image input part; an image processor which highlights the image section detected by the image detector; and an image display processor which performs processing so that the image processed by the image processor is displayed on a display device connected to the information display processing device.

The invention provides an information display processing device including: an image input part which acquires a video signal outputted from an external terminal; an image detector which detects an image section to be detected from an image indicated by the video signal acquired by the image input part; an operation conversion portion which generates operation information for the image section and converts the operation information into operation for the video signal acquired by the image input part; and an image display processor which performs processing so that the image inputted from the image input part is displayed on a display device connected to the information display processing device.

Advantageous Effects of Invention

According to the information display processing device according to the invention, processing can be made so that information in an external terminal is displayed in a desired display form on a display device provided separately from the external terminal. As a result, display in a form easily viewable and easily understandable to a user on the display device can be made without provision of any special mechanism in the external terminal.

Brief Description of Drawings

[Fig. 1] Fig. 1 is a block diagram showing the configuration of an information display processing device and its periphery in an embodiment of the invention.
[Fig. 2] Fig. 2 is a view showing an example in which a frame of each icon registered in an external terminal information management portion 129 is highlighted thickly.
[Fig. 3] Fig. 3(a) and Fig. 3(b) are views each showing an example in which icons registered in the external terminal information management portion 129 are enlarged while the color of a menu image as a whole is lightened.

[Fig. 4] Fig. 4 is a view showing an example of contents managed by the external terminal information management portion 129 in the embodiment of the invention.

[Fig. 5] Fig. 5 is a flow chart showing processing performed by an image detector 128 in the embodiment of the invention.

[Fig. 6] Fig. 6(a) is a view showing an example of an icon managed by the external terminal information management portion 129, and Fig. 6(b) is a view showing an example of an image of a menu screen including the icon shown in (a).

[Fig. 7] Fig. 7(a) and Fig. 7(b) are views each showing an unsharply outlined icon and its size.

[Fig. 8] Fig. 8 is a flow chart showing processing performed by an image processor 122 in the embodiment of the invention.

[Fig. 9] Fig. 9 is a flow chart showing processing performed by an operation conversion portion 125 in the embodiment of the invention.

[Fig. 10] Fig. 10 is a view showing operation on a position of coordinates (X, Y) 930 included in a region of an icon 920 in a menu image 910 which is displayed on a display device 123 and which includes images of highlighted icons.

[Fig. 11] Fig. 11 is a view showing operation on a menu screen of an external terminal 100 based on conversion of operation information in Fig. 10.

[Fig. 12] Fig. 12 is a sequence flow chart showing an example of operating timing in each of the image detector 128, the image processor 122 and the operation conversion portion 125 in the embodiment of the invention.

[Fig. 13] Fig. 13 is a view showing an example of the menu screen displayed on a display screen of the external terminal.

[Fig. 14] Fig. 14 is a view showing an example in which a highlighted menu for urging the user to start a specific application is displayed.

[Fig. 15] Fig. 15 is a view for explaining processing performed by the operation conversion portion 125 in the case where the highlighted menu is displayed on the information display processing device according to the embodiment of the invention.

[Fig. 16] Fig. 16 is a sequence flow chart showing another example of operating timing in each of the image detector 128, the image processor 122 and the operation conversion portion 125 in the embodiment of the invention. Description of Embodiments

An embodiment of the invention will be described below with reference to the drawings.

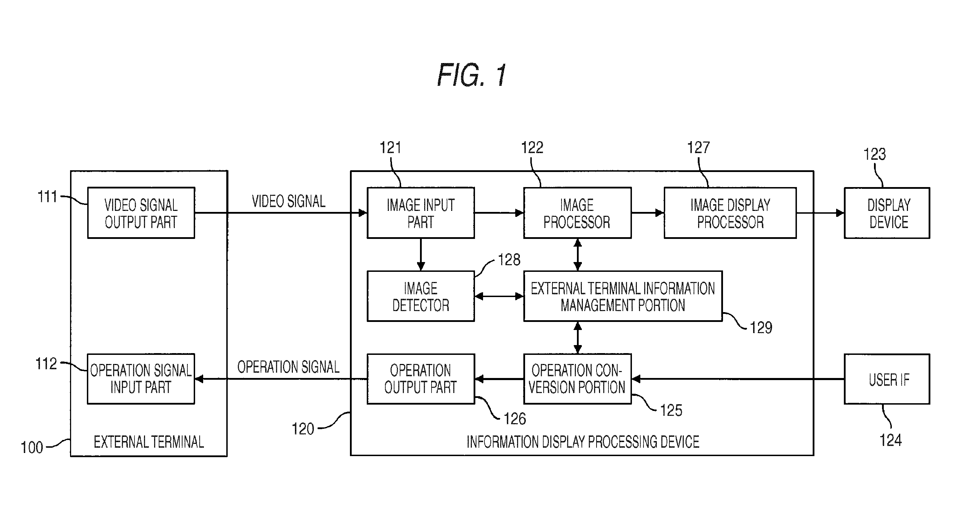

Fig. 1 is a block diagram showing the configuration of an information display processing device and its periphery in an embodiment of the invention. As shown in Fig. 1, an external terminal 100 has a video signal output part 111 which outputs a video signal to the outside, and an operation signal input part 112 to which an operation signal for the external terminal 100 is inputted from an information display processing device 120 to which the external terminal 100 is connected.

The external terminal 100 is a cellular phone, a smartphone, a potable information terminal, a media player such as an audio player or a video player, a portable navigation device, a notebook type personal computer, or the like. The video signal outputted from the video signal output part 111 of the external terminal 100 is, for example, a signal for displaying a menu screen 600 shown in Fig. 13 on a display device 123.

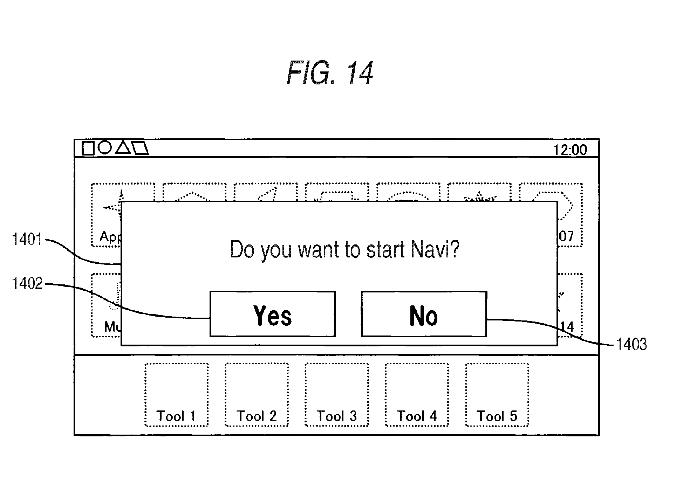

On the menu screen 600 shown in Fig. 13, 14 icons 610 and 5 frequently used tool icons 620 are displayed. Incidentally, each icon is an image section made of characters, a graphic symbol or a combination of these.

The information display processing device 120 is connected to the aforementioned external terminal 100 so that the information display processing device 120 can communicate with the external terminal 100. The information display processing device 120 is connected also to the display device 123 and a user interface (user IF) 124. The display device 123 is a liquid crystal display or the like which displays video corresponding to the video signal transmitted from the information display processing device 120.

The user interface (user IF) 124 is a pointing device such as a touch panel, a mouse, a track ball or a switch on a steering wheel, which accepts user's operation on the information display processing device 120. When the information display processing device 120 is loaded into a car, a functional system such as a car navigation system or an audio system may be included in the information display processing device 120 or may be connected to the information display processing device 120.

As shown in Fig. 1, the information display processing device 120 has an image input part 121, an image processor 122, an image display processor 127, an operation conversion portion 125, an operation output part 126, an image detector 128, and an external terminal information management portion 129. Incidentally, for example, the image processor 122, the operation conversion portion 125, the image detector 128 and the external terminal information management portion 129 are achieved by a CPU, an ROM and an RAM.

The CPU executes a computer program stored in the ROM while using the RAM as a work area. The image processor 122, the operation conversion portion 125, the image detector 128 and the external terminal information management portion 129 may operate on one and the same CPU.

The image input part 121 acquires a video signal from the external terminal 100 connected by wire such as HDMI (registered trademark) or by wireless. Incidentally, the video signal may be a motion image signal or may be a video signal based on a still image such as a JPEG file.

The image processor 122 expands the video signal acquired by the image input part 121 on the RAM and outputs information on the RAM as a video signal to the image display processor 127. Specifically, the image processor 122 processes the video signal so that video (video or image indicated by the video signal) is displayed in an appropriate size or layout to the display device 123.

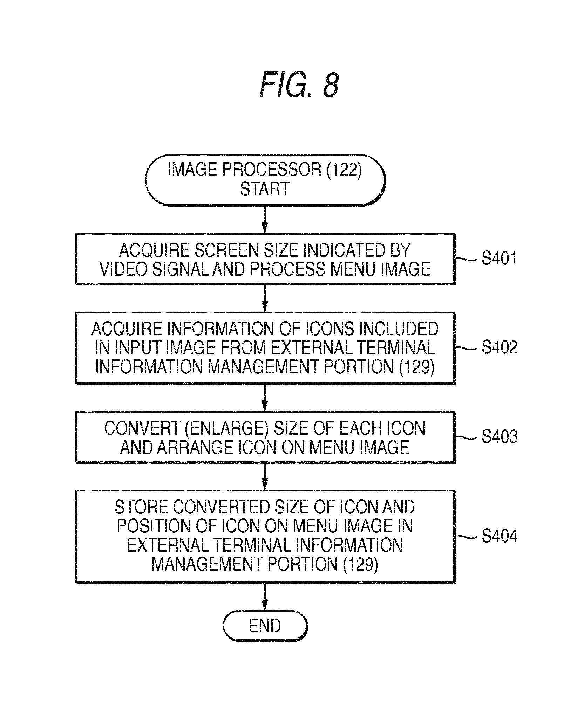

For example, even when the menu screen shown in Fig. 13 is displayed on the display (not shown) of the external terminal 100, the image processor 122 performs processing by using information of a specific application managed by the external terminal information management portion 129 so that an icon of the specific application is highlighted on the display device 123 (highlight processing). Detailed operation of the image processor 122 will be described later with reference to a flow chart shown in Fig. 8.

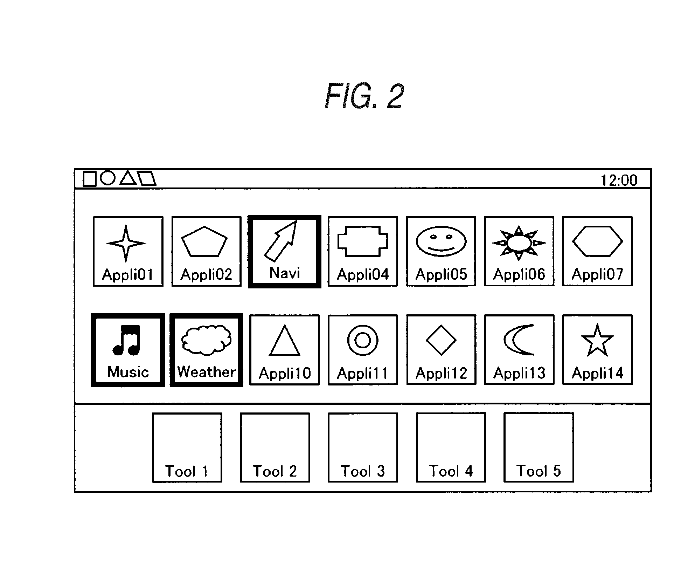

A method of enlarging the icon, a method of attaching a highlighted frame to the icon, a method of displaying a highlighted icon with a different color or design, a method of suppressing other icons by hiding the other icons or by lightening the colors of the other icons, and the like, inclusively of combinations of these methods, are thought of as a processing method for highlighting the icon which method is performed by the image processor 122. Fig. 2 is a view showing an example in which frames of icons registered in the external terminal information management portion 129 are highlighted thickly.

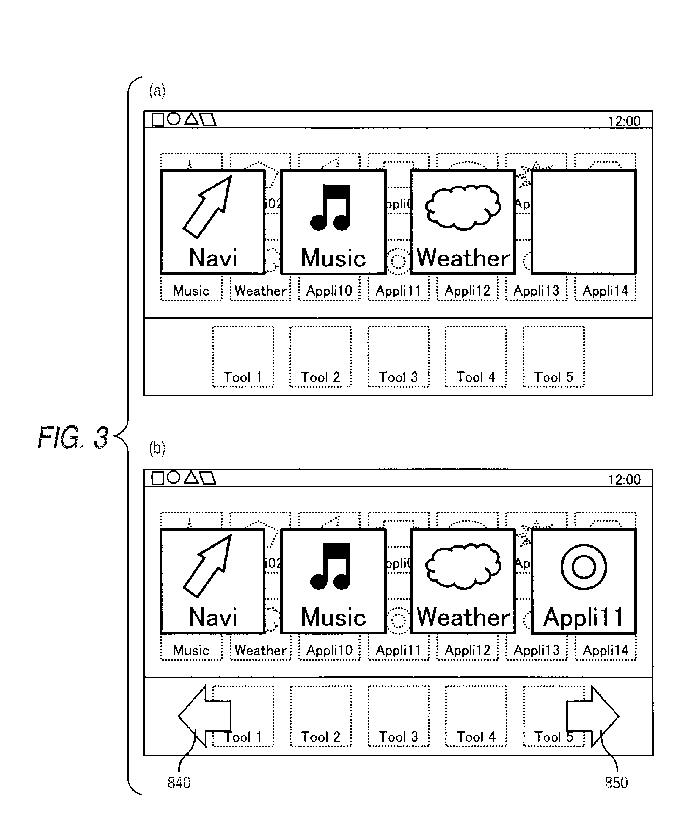

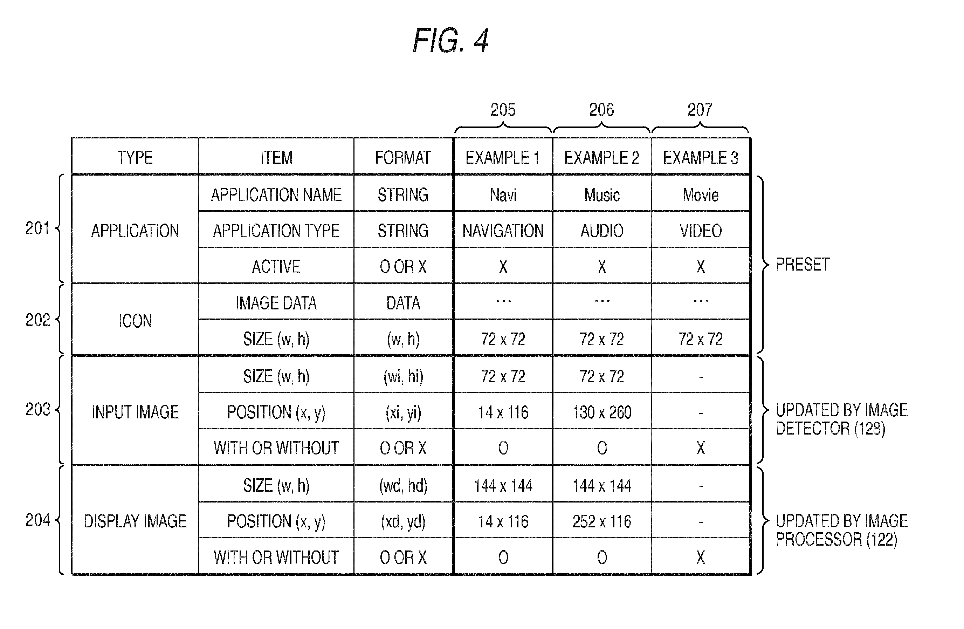

Figs. 3(a) and 3(b) are views showing examples in which the color of the menu image as a whole is lightened and icons registered in the external terminal information management portion 129 are enlarged. Particularly in the example shown in Fig. 3(b), up to 4 icons can be enlarged on one screen but 5 or more icons are detected. In Fig. 3(b), 4 icons are enlarged and the presence of additional pages for displaying other icons is indicated by arrows 840 and 850.

A highlighted menu may be displayed as another processing method for highlight display. An example in which a highlighted menu is displayed will be described with reference to Fig. 14.

Fig. 14 is a view showing an example of a highlighted menu 1401 for urging the user to start a specific application. As shown in Fig. 14, the highlighted menu 1401 is a menu for urging the user to start a specific application or urging the user to select a next process in the information display processing device 120 or the external terminal 100.

Use of the highlighted menu display is effective when there is only one specific application in the video signal acquired by the image input part 121 or when there is a high-priority specific application included in the video signal acquired by the image input part 121. In this case, the user can start the specific application by operating a "Yes" button 1402. Or when the user operates a "No" button 1403, the highlighted menu 1401 may be removed so that icons of other specific applications can be highlighted like the display contents illustrated in Fig. 3.

The image display processor 127 performs processing so that the menu image processed for highlighting icons by the image processor 122 is displayed on the display device 123. Incidentally, it is desirable that the same video as in the screen of the external terminal 100 can be displayed on the display device 123.

The operation conversion portion 125 acquires information of operation performed on the user interface 124 and expands the information on the RAM. Specifically, the operation conversion portion 125 determines whether the operation on the user interface 124 is an operation for the highlighted icon or not, based on the information managed by the external terminal information management portion 129. When the operation is an operation for the highlighted icon, the operation conversion portion 125 converts the operation information into operation information for the icon before highlighting and expands the operation information on the RAM.

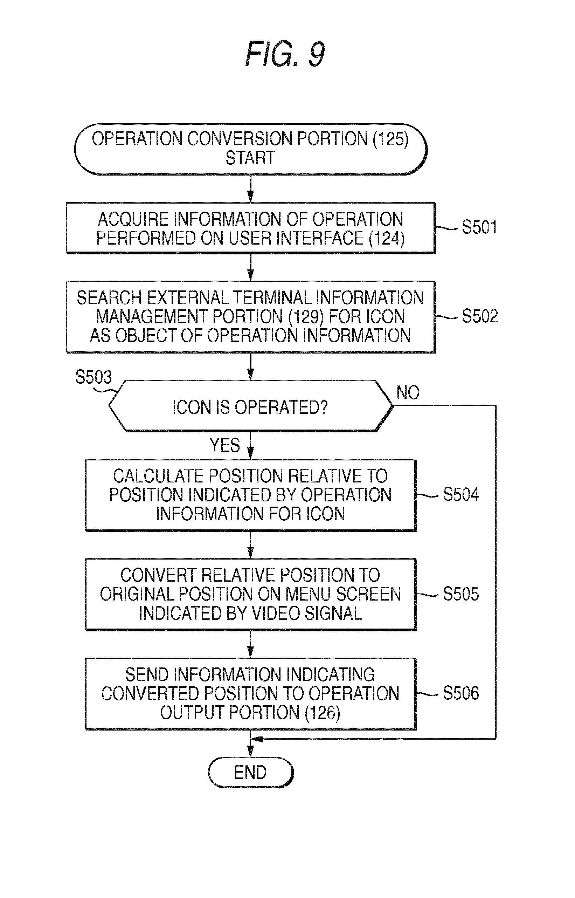

For example, when the user interface 124 is a pointing device such as a touch panel, the operation conversion portion 125 acquires coordinate information of the designated operation position. The acquired coordinate information is information for an image of the icon size-converted and arranged by the image processor 122. Therefore, the operation conversion portion 125 converts the coordinate information into operation information for the menu screen indicated by the video signal. Detailed operation of the operation conversion portion 125 will be described later with reference to a flow chart shown in Fig. 9.

The operation output part 126 outputs information of the operation target, operation contents, etc. expanded from the operation conversion portion 125 onto the RAM as an operation signal to the external terminal 100 by wire communication using USB HID (Human Interface Device) class, etc. or by wireless communication using Bluetooth (registered trademark) HID profile, etc.

The image detector 128 confirms whether the video signal acquired by the image input part 121 is an instruction screen (menu screen) to start specific applications or not, and detects icons of specific applications included in the screen. With respect to the specific applications, a car navigation software, a music playback software, etc. are thought of as functions used in the car.

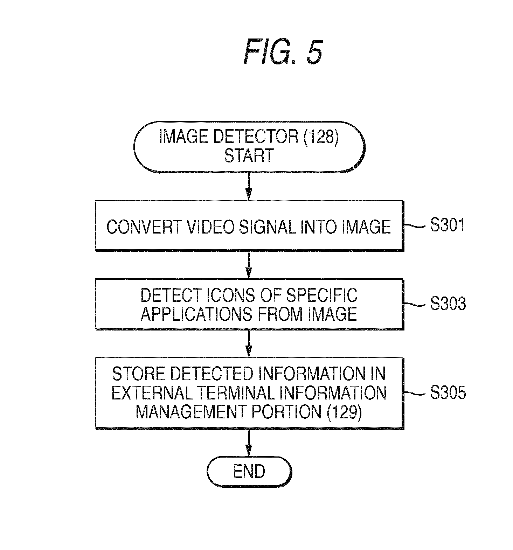

Incidentally, information of specific applications to be detected by the image detector 128 is registered in the external terminal information management portion 129 in advance. On the other hand, the image detector 128 registers information of specific applications detected from the menu screen in the external terminal information management portion 129. Detailed operation of the image detector 128 will be described later with reference to a flow chart shown in Fig. 5.

The external terminal information management portion 129 stores information of specific applications to be detected by the image detector 128. The external terminal information management portion 129 records operation for a specific application detected by the operation conversion portion 125. Accordingly, operation of the specific application on the user interface 124 is managed on the information display processing device 120.

An example of management contents of the external terminal information management portion 129 will be described below in detail with reference to Fig. 4. As shown in Fig. 4, the contents managed by the external terminal information management portion 129 are "type", "item" and "format".

The type is classified into "application", "icon", "input image" and "display image". For example, when the type is "application", management items "application name", "application type" and "active (or not)" are managed.

With respect to each data format, "string" (character string), "O or X" (with or without, yes or no, etc.), "data" (binary data) or "numerical value" is designated as shown in the column "format". Incidentally, the description "(w, h)" in Fig. 4 shows a combination of two numerical values "w" and "h".

Contents managed in the line (201) of the type "application" will be described below. The contents are set in the external terminal information management portion 129 in advance.

- Application name (character string showing the name of the application)
- Application type (character string showing the type of the application such as navigation (navi), audio player (audio), video player (video), etc.)
- Active (It indicates whether the application is active or not. Inactive (e.g. X) is set as an initial value.)

Contents managed in the line (202) of the type "icon" will be described below. The contents are set in the external terminal information management portion 129 in advance.

- Image data (binary data of the icon or its storage place)
- Size (the respective numbers of pixels in height (h) and width (w) of the icon)

Part of contents (which are information of the application and in the line (203) of the type "input image") managed by the external terminal information management portion 129 are updated by the image detector 128. Contents managed in the line (203) of the type "input image" will be described below.

- Size (the respective numbers of pixels in height (hi) and width (wi) of the icon displayed on the menu screen indicated by the video signal)
- Position (the respective positions of height (yi) and width (xi) of the icon displayed on the menu screen indicated by the video signal)
- With or without (It shows whether the icon is displayed on the menu screen indicated by the video signal or not.)

The external terminal information management portion 129 may manage image data of the icons extracted from the video signal in addition to the above description.

Information of respective applications concerned with display images displayed on the display device 123 is updated by the image processor 122. Contents managed in the line (204) of the type "display image" will be described below.

- Size (the respective numbers of pixels in height (hd) and width (wd) of the icon displayed in the display image)
- Position (the respective positions of height (yd) and width (xd) of the icon displayed in the display image)
- With or without (It shows whether the icon is displayed in the display image or not.)

Other than the above description, image data of the icon processed by the image processor 122 and displayed on the display device 123 may be managed.

The columns 205 to 207 shown in Fig. 4 show examples of setting values. The fact is indicated that the icon is enlarged and displayed in the display image (line 204) because a menu screen including a navigation software (205) and an audio player (206) is inputted from the external terminal 100 (line203). The video player (207) is not included in the input image (line 203).

Processing performed by the image detector 128 will be described below in detail with reference to a flow chart shown in Fig. 5. As shown in Fig. 5, the image detector 128 first converts a video signal corresponding to the menu screen acquired by the image input part 121 into an image (step S301). Then, the image detector 128 detects respective icons of specific applications registered in the external terminal information management portion 129 from the converted image of the menu screen (step S303).

Incidentally, for example, the image detector 128 calculates a difference between an image of the icon of each color or gray-scaled specific application and the image of the menu screen while scanning the whole image, and detects each place where the difference is smaller than a predetermined value as an icon-detected place.

However, the specific detection method for detecting respective icons of specific applications from an image corresponding to the converted menu screen is not limited to the aforementioned method of calculating while scanning. That is, a method of detecting a range (in position and size) of presence of each icon image in the converted image may be used.

By step S303, icons included in the image of the menu screen are detected among icons of specific applications registered in the external terminal information management portion 129. A range (in position and size) of presence of each icon on the menu image becomes clear. The image detector 128 stores the position and size of each icon detected by the step S303 as detected information in the external terminal information management portion 129 (step S305). In the step S305, respective items in the line (203) of "input image" shown in Fig. 4 are updated.

Incidentally, when respective items in the line (203) of "input image" shown in Fig. 4 are updated, the columns (205) to (207) may be updated at once (in parallel) or may be updated one by one successively.

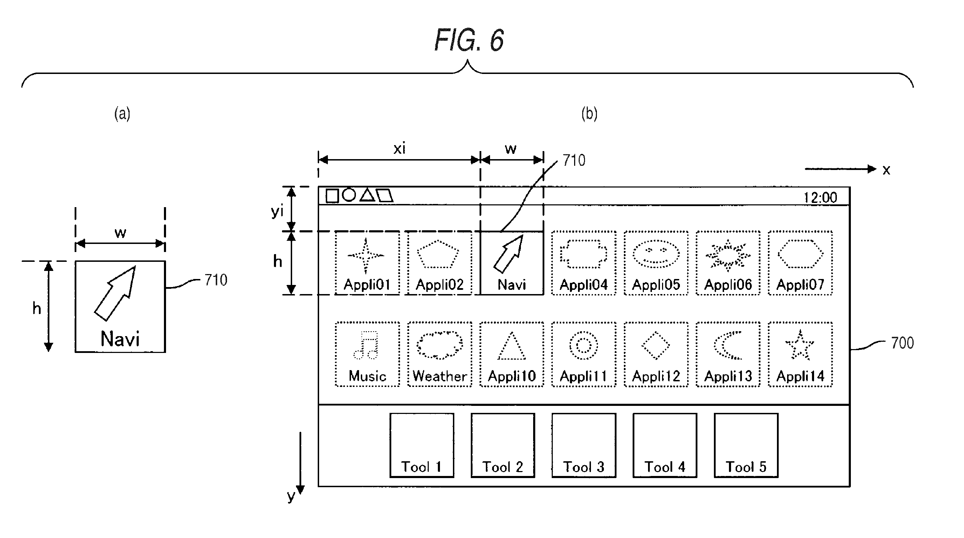

Fig. 6(a) is a view showing an example of an icon managed by the external terminal information management portion 129. Fig. 6(b) is a view showing an example of the image of the menu screen including the icon shown in Fig. 6(a). The size of the icon 710 shown in Fig. 6(a) is $h$ pixels high and $w$ pixels wide.

In the case of a sharply outlined icon as represented by the icon 710, the coordinates of the position of the icon 710 on the image 700 of the menu screen shown in Fig. 6(b) can be expressed as $(x_i, y_i)$. Incidentally, the size of each icon managed by the external terminal information management portion 129 may be different from the size of a corresponding icon on the image 700 of the menu screen as long as a method by which the icon can detected in spite of the difference in size is used. As to the way to determine the coordinates of the position, the coordinates of the position may be determined by the image detector 128 or may be managed by the external terminal information management portion 129 in accordance with each icon.

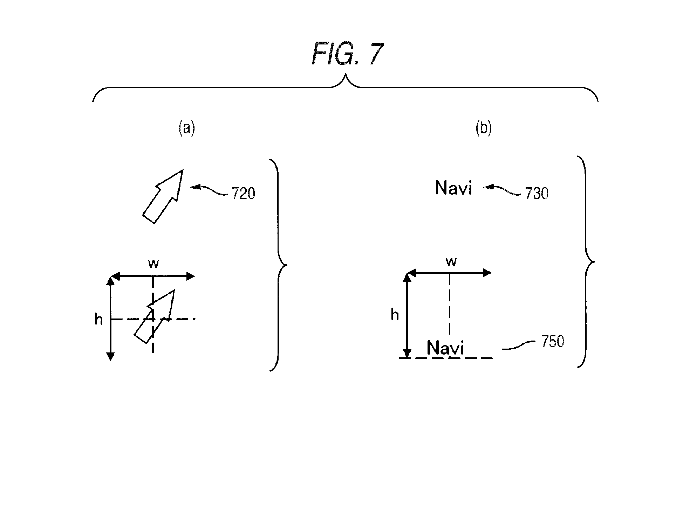

Figs. 7(a) and 7(b) are views each showing an unsharply outlined icon and its size. In the case of an icon 720 containing a figure only as shown in Fig. 7(a), the coordinates $(x_i, y_i)$ of the position of the icon 720 may be determined so that the center of the figure detected on the image 700 of the menu screen coincides with the center of a region $h$ pixels high and $w$ pixels wide because the icon 720 is unsharply outlined. Also in the case of an icon 730 containing characters only as shown in Fig. 7(b), the coordinates $(x_i, y_i)$ of the position of the icon 730 may be determined so that the lower side and lateral center of the characters detected on the image 700 of the menu screen coincide with the lower side and lateral center of the icon respectively because the icon 730 is unsharply outlined likewise.

Processing performed by the image processor 122 will be described below in detail with reference to a flow chart shown in Fig. 8. The image processor 122 performs image processing and rearrangement of icons of applications managed by the external terminal information management portion 129 and included in the image of the menu screen indicated by the video signal, and outputs a menu image different from the menu screen indicated by the video signal to the image display processor 127.

As shown in Fig. 8, the image processor 122 first acquires the screen size indicated by the video signal acquired by the image input part 121, and processes a menu image (step S401). To superpose icon images on the video signal for display, the image processor 122 processes the video signal, for example, by reducing brightness if necessary so that visibility of the icons is not spoiled.

Then, the image processor 122 acquires information of icons included in the input image stored in the external terminal information management portion 129 (step S402). Specifically, the image processor 122 acquires image data and size information (202) of icons which are designated by the reference numeral 202 and are corresponding to icons in which the item "with or without" in the line (203) of "input image" shown in Fig. 4 is O (the icon is included in the input image). Incidentally, if image data of the icons extracted from the input image indicated by the video signal are managed by the external terminal information management portion 129, the image processor 122 may acquire the extracted image data.

Then, the image processor 122 converts the size of each icon acquired in the step S402, and arranges the size-converted icon image on the menu image processed in the step 401 (step S403). Because the screen size indicated by the video signal has been acquired in the step 401, the image processor 122 can determine arrangement of icons on the menu image when the maximum number of displayed icon images and the display size thereof are determined in advance.

Then, the image processor 122 stores the sizes of size-converted icon images and the positions thereof on the menu image in the external terminal information management portion 129 (step S404). Specifically, the image processor 122 stores the sizes and positions of the size-converted icons in the line (204) of "display image" shown in Fig. 4, and sets the item "with or without" as O (the icons are highlighted). Incidentally, because the number of size-converted icons allowed to be arranged on the menu screen is limited, the image processor 122 repeats the steps S401 to S404 and terminates processing when the number of icons arranged on the menu screen reaches a maximum number. Incidentally, when the number of icons reaches the maximum number, the following methods 1 and 2 may be performed.

Method 1. Priorities of applications are set in the external terminal information management portion 129, so that the image processor 122 acquires information of icons in order of the priorities of the applications. As a result, icons of high-priority applications are absolutely displayed.

Incidentally, priorities of applications may be defined directly in accordance with the applications by the external terminal information management portion 129 or correspondence of priorities with the items "application name" and "application type" in the line (201) of "application" may be defined separately. For example, when the priority of an application whose "application type" is "navigation" is set high, the icon of the application is displayed preferentially.

Method 2. The menu image is generated from a plurality of page screens, so that the image processor 122 performs processing so that icons of applications exceeding the aforementioned maximum number of displayed icon images are displayed on a second page screen and page screens after the second page screen.

Because icons included in the menu screen indicated by the video signal and registered in the external terminal information management portion 129 are processed and rearranged by the image processor 122 in this manner, a menu image easily viewable and easily understandable to the viewer is displayed on the display device 123. Incidentally, when the number of icons to be displayed is large, the icons may be selected in accordance with priority or may be displayed on a plurality of pages.

Although the image processor 122 acquires information of icons included in the input image from the external terminal information management portion 129 in the step S402 in the above description, the image processor 122 may one-by-one acquire information of all icons registered in the external terminal information management portion 129 based on priorities of applications or the like. Incidentally, the sequence of acquiring information of icons need not be limited to priorities and may be determined in advance.

In this manner, when information of icons registered in the external terminal information management portion 129 is included in the menu screen indicated by the video signal, icons of all applications registered in the external terminal information management portion 129 can be displayed on a plurality of pages.

Processing performed by the operation conversion portion 125 will be described below in detail with reference to a flow chart shown in Fig. 9. The operation conversion portion 125 acquires information of operation performed on the user interface 124 (step S501).

Then, the operation conversion portion 125 searches the external terminal information management portion 129 for an icon as an object of the operation information (step S502). When the position indicated by the operation information is included in the range in position and size designated in the line (204) of "display image" shown in Fig. 4, the operation conversion portion 125 determines the icon as an object of the operation. That is, the operation conversion portion 125 determines whether an icon registered in the external terminal information management portion 129 is operated or not (step S503).

When determination in the step S503 results in that the icon is not operated, the operation conversion portion 125 terminates processing without doing anything. Incidentally, on this occasion, the operation conversion portion 125 may output information for canceling the operation or may output the operation directly as operation information for the video signal without conversion of the operation.

On the other hand, when determination in the step S503 results in that the icon is operated, the operation conversion portion 125 calculates a position relative to the position indicated by the operation information for the icon displayed on the display device 123 (step S504). Then, the operation conversion portion 125 converts the calculated relative position into an original position on the menu screen indicated by the video signal (step S505). The operation conversion portion 125 sends information indicating the position converted in the step S505 to the operation output part 126 (step S506).

When the step S506 is performed, the operation conversion portion 125 registers in the external terminal information management portion 129 the fact that an application corresponding to the icon as an object of the operation is active. Specifically, the operation conversion portion 125 registers the fact that the application is active (O), for the item of "active" in the line (201) shown in Fig. 4.

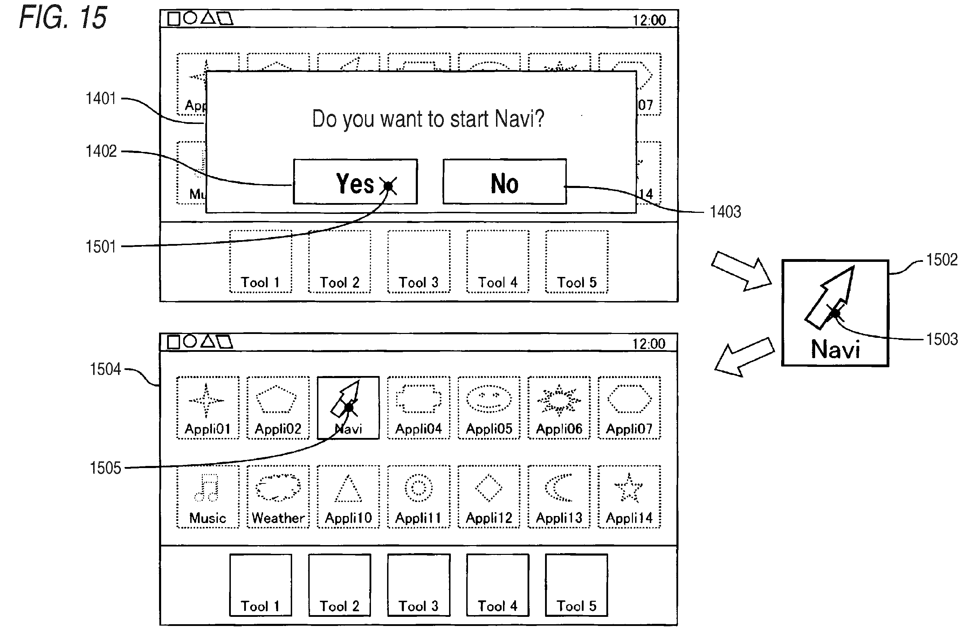

Processing performed by the operation conversion portion 125 in the case where the highlighted menu 1401 shown in Fig. 14 is displayed will be described with reference to Fig. 15. When the highlighted menu 1401 shown in Fig. 14 is displayed, correspondence of an icon (in this case, the icon is an icon of Navi because the highlighted menu 1401 is "Navi" in the example shown in Fig. 14) registered in the external terminal information management portion 129 with the "Yes" button 1402 can be established, for example, by such processing that the relative position indicated by operation information on the "Yes" button 1402 is converted into the center position of a corresponding icon 1502.

That is, when an arbitrary point 1501 on the "Yes" button 1402 is operated in the determination in the step S503 as to whether the "Yes" button 1402 or "No" button 1403 is operated or not, recognition as if a center point 1503 of the corresponding icon 1502 were operated may be performed in the step S504, and conversion processing as if a center point 1505 of the icon on an original menu screen 1504 indicated by the video signal were operated may be performed in the step S505.

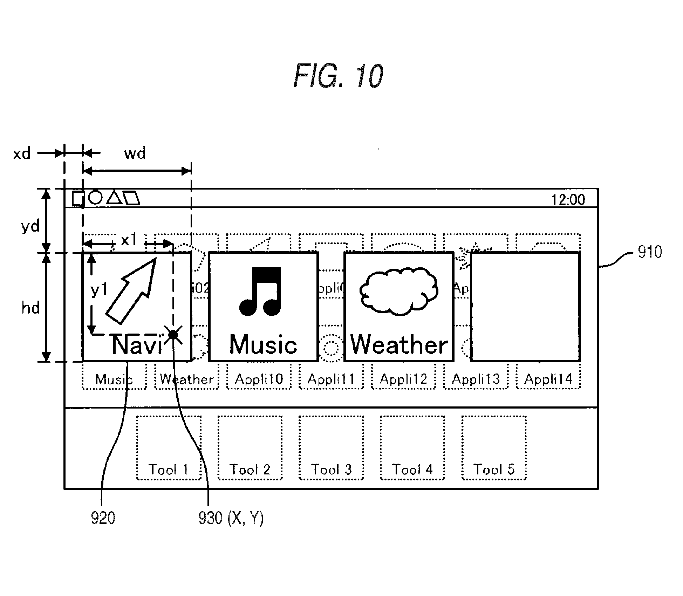

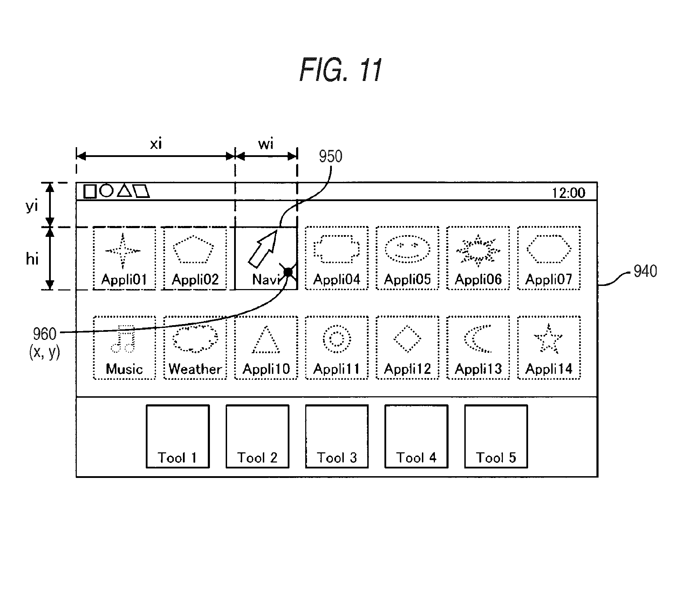

Conversion of operation information by the operation conversion portion 125 will be described in detail with reference to Figs. 10 and 11. Fig. 10 shows an operation on a position of coordinates $(X, Y)$ 930 included in a region of an icon 920 in an icon image-highlighted menu image 910 displayed on the display device 123. Fig. 11 shows an operation on a menu screen of the external terminal 100 in accordance with conversion of operation information in Fig. 10.

The icon 920 shown in Fig. 10 is displayed with a size $(wd, hd)$ in a position $(xd, yd)$ in the menu image 910. As shown in Fig. 11, an icon 950 corresponding to the application of the icon 920 is displayed with a size $(wi, hi)$ in a position $(xi, yi)$ on the menu screen 940 of the external terminal 100. Therefore, the operation conversion portion 125 calculates coordinates $(x, y)$ 960 on the menu screen 940 corresponding to the coordinates (X, Y) 930.

First, whether the coordinates (X, Y) 930 indicate an operation on the icon 920 or not, can be determined by whether the X and Y values of the coordinates (X, Y) satisfy the following conditions or not.

$$xd \leq X \leq xd+wd$$

$$yd \leq Y \leq yd+hd$$

The operation conversion portion 125 applies the determination to all icons of display images (240) managed by the external terminal information management portion 129. When an icon (application) as an object of the operation is determined, the operation conversion portion 125 registers the fact that the application is active (O) due to the operation, in the item "active" in the line (201) shown in Fig. 4 in the external terminal information management portion 129.

Then, the operation conversion portion 125 calculates coordinates (x, y) 960 on the menu screen 940 corresponding to the coordinates (X, Y) 930. First, a position (x1, y1) on the icon 920 corresponding to the coordinates (X, Y) 930 is calculated according to the following expressions.

$$x1 = X\text{-}xd$$

$$y1 = Y\text{-}yd$$

Accordingly, the x and y values of the coordinates (x, y) 960 are given by the following expressions.

$$x = xi+wi\times(X\text{-}xd)/wd$$

$$y = yi+hi\times(Y\text{-}yd)/hd$$

The operation conversion portion 125 sends information of the coordinates (x, y) 960 calculated according to the aforementioned expressions to the operation output part 126.

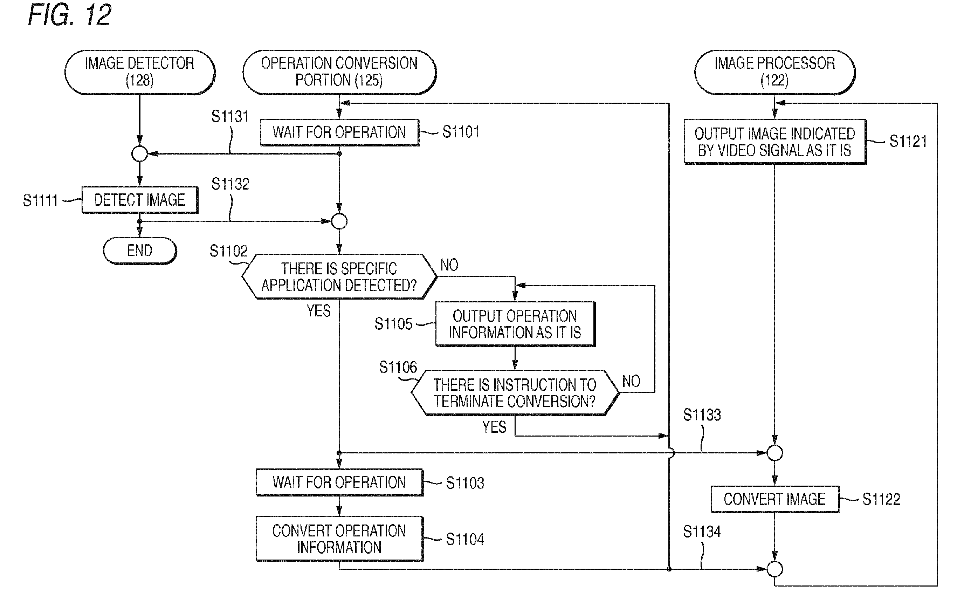

An example of operating timing in each of the image detector 128, the image processor 122 and the operation conversion portion 125 provided in the information display processing device 120 according to the aforementioned embodiment will be described with reference to Fig. 12. Although the image detector 128, the image processor 122 and the operation conversion portion 125 may perform processing respectively as the occasion demands, the initial state in the example shown in Fig. 12 is set as follows.

- Image detector 128: does not perform processing
- Image processor 122: outputs an image indicated by the video signal as it is without performing any processing (step S1121)
- Operation conversion portion 125: waits for operation (step S1101)

Acquisition of information of any operation by the operation conversion portion 125 triggers start of processing. Upon acquisition of information of any operation, the operation conversion portion 125 sends an instruction to the image detector 128 to perform image detection 1111 (step S1131). When the operation conversion portion 125 receives a result of the image detection from the image detector 128 (step S1132) and a specific application is detected in the operation conversion portion 125 as a result of the image detection in the step S1111 (step S1102), there is a high possibility that the image indicated by the video signal will be a menu image. For this reason, the operation conversion portion 125 sends an instruction to the image processor 122 to perform image conversion 1122 (step S1133).

Upon reception of the instruction, the image processor 122 performs image conversion (step S1122) and displays the converted image on the display device 123. Further, the operation conversion portion 125 waits for operation (step S1103). Because the inputted operation is an operation for the image converted by the image processor 122 in the step S1122, the operation conversion portion 125 applies conversion of operation information to the inputted operation (step S1104).

After conversion of operation information is completed (step S1104), the operation conversion portion 125 sends an instruction to the image processor 122 (step S1134) to terminate the image conversion (step S1122). The image processor 122 continuously outputs the image indicated by the video signal as it is (step S1121).

When there is no specific application detected in the operation conversion portion 125 as a result of the image detection in the step S1111 (step S1102), there is a low possibility that the image indicated by the video signal will be a menu image.

For this reason, the image processor 122 continuously outputs the image indicated by the video signal as it is without performing any processing (step S1121), so that the operation conversion portion 125 outputs the operation information as it is without conversion of the operation information (step S1105). When there is an instruction to terminate conversion of operation information (step S1106), the operation conversion portion 125 goes back to the step S1101 to wait for operation again.

For example, the instruction to terminate conversion of operation information in the step S1106 can be judged from the following operations 1 to 3.

1. Conversion is terminated (step S1106) when a specific physical button is pushed down.
2. Conversion is terminated (step S1106) when a predetermined time has passed after the first or last input operation is outputted as it is (step S1105).
3. Conversion is terminated (step S1106) by a specific operation such as an operation of moving (flicking) a finger laterally largely on the touch panel.

The information display processing device 120 performs the following operations A to D by a processing procedure shown in Fig. 12.

A. When there is an operation input from the user, the image detector 128 starts so that an icon is highlighted when a specific application is detected.
B. When the icon is highlighted, the operation conversion portion 125 converts operation so that the user can operate the highlighted screen.
C. When there is no icon to be highlighted, the operation conversion portion 125 outputs operation without conversion so that the user can operate the original input image which is not converted.
D. When there is an instruction to terminate conversion, processing goes back to the operation A.

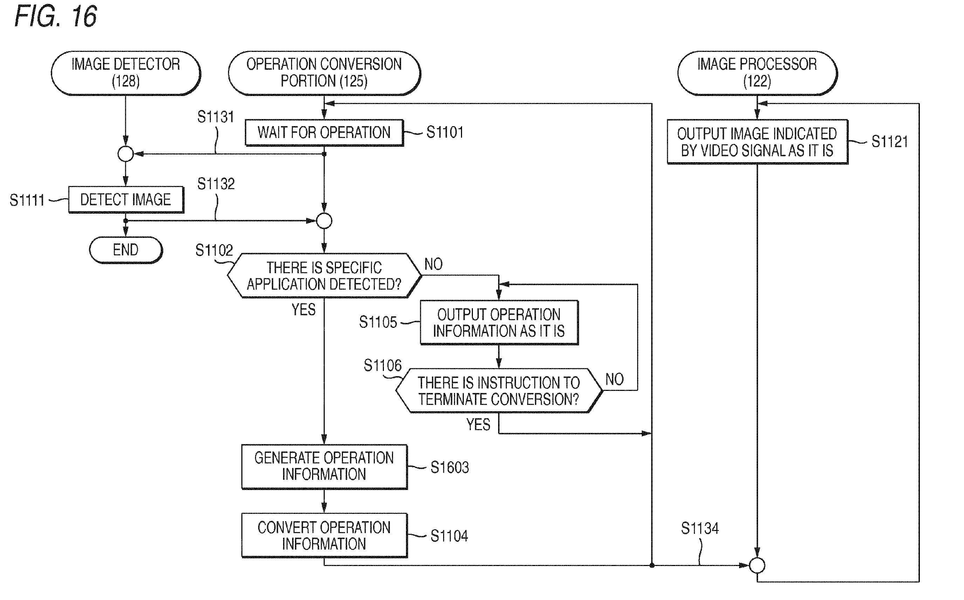

Another example of operating timing in each of the image detector 128, the image processor 122 and the operation conversion portion 125 provided in the information display processing device 120 according to this embodiment will be described with reference to Fig. 16. The initial state in the example shown in Fig. 16 is the same as the initial state in the example shown in Fig. 12.

In the example shown in Fig. 12, when a specific application is detected in the step S1102, the operation conversion portion 125 sends an instruction to the image processor 122 to perform image conversion 1122 (step S1133). However, in the example shown in Fig. 16, the operation conversion portion 125 determines the specific application as a desired application automatically. For this reason, the operation conversion portion 125 does not send any instruction to the image processor 122 to perform image conversion 1122 but generates virtual operation information for selecting a specific application (step S1603) and converts the operation information (step S1104).

The information display processing device 120 performs the following operations A to C by a processing procedure shown in Fig. 16.

A. When there is an operation input from the user, the image detector 128 starts to detect a specific application.

B. The operation conversion portion 125 generates operation for the detected specific application automatically and converts the operation.
C. The user does not have to operate the specific application in person but can acquire a result of operation automatically.

As described above, in accordance with the embodiment of the invention, processing can be made so that information in an external terminal is displayed in a desired display form on a display device provided separately from the external terminal.

For example, one of the desired display forms is highlighting. According to the information display processing device 120 in this embodiment, the image detector 128 detects icons of specific applications to be highlighted from the video signal acquired from the external terminal 100 by the image input part 121 and the image processor 122 performs processing for highlighting images of the detected icons and superposes the images of the icons on the video signal. Accordingly, an image easily viewable and easily understandable to the user can be displayed on the display device 123 without any special mechanism provided in the external terminal 100.

The term "special mechanism" mentioned herein means a mechanism in which the external terminal 100 per se performs image processing in addition to the display form in accordance with a request (to give priority to easily viewable display or to give priority to display easy to determine menu icons) of the display device connected to the external terminal 100. Because it is not necessary to provide any special mechanism in the external terminal 100, the user can use a general-purpose terminal as the external terminal.

The operation conversion portion 125 converts operation information on an icon highlighted on the display device 123 into operation information for the video signal received by the image input part 121 before highlighting, and sends the operation information back to the external terminal 100. Accordingly, the user can operate the external terminal 100 by operating the highlighted icon on a touch panel or the like.

The external terminal information management portion 129 manages icons to be highlighted. Further, the image detector 128 detects icons to be highlighted by referring to the external terminal information management portion 129. Accordingly, when icons to be highlighted are registered in the external terminal information management portion 129 at any time as the occasion demands, desired icons can be highlighted on the display device 123.

The external terminal information management portion 129 further manages position coordinates and sizes of to-be-highlighted icons detected by the image detector 128 and position coordinates and sizes of to-be-highlighted icons highlighted by the image processor 122. Accordingly, information of user's operation on the menu image displayed on the display device 123 can be converted into information of operation on the video signal from the external terminal 100 before highlighting so that the user can operate the external terminal 100.

According to the embodiment of the invention, information in the external terminal 100 can be displayed in a desired display form on the display device 123 provided separately from the external terminal 100 without user's direct operation.

For example, when the desired display form is a specific application execution screen, in accordance with the information display processing device 120 according to this embodiment, the image detector 128 detects an icon of a specific application to be highlighted from the video signal acquired from the external terminal 100 by the image input part 121, and the operation conversion portion 125 generates operation information for the detected icon automatically, converts the operation information into operation information for the video signal (received by the image input part 121) before highlighting, and sends the converted operation information back to the external terminal 100. Accordingly, a start-up screen of a desired specific application can be automatically displayed on the display device 123 as a result of operation on an icon without user's operating a displayed icon.

Although the invention has been described in detail and with reference to specific embodiments, it is obvious to those skilled in the art that various changes or modifications may be made without departing from the spirit and scope of the invention.

The present application is based on Japanese Patent Application (Japanese Patent Application No. 2011-244827) filed on November 8, 2011, the contents of which are incorporated herein by reference.

Industrial Applicability

The information display processing device according to the invention is useful as an information display processing device etc. to which an external terminal such as a cellular phone or a smartphone is connected and which processes a video signal to display video. For example, the information display processing device is useful as an on-vehicle information display processing device loaded in a car.

Reference Signs List

100 external terminal
111 video signal output part
112 operation signal input part
120 information display processing device
121 image input part
122 image processor
123 display device

124 user interface (user IF)
125 operation conversion portion
126 operation output part
127 image display processor
128 image detector
129 external terminal information management portion

**Claims**

1. An information display processing device comprising:

an image input part that acquires a video signal outputted from an external terminal;
an image detector that detects an image section to be highlighted from an image indicated by the video signal acquired by the image input part;
an image processor that highlights the image section detected by the image detector; and
an image display processor that performs processing so that the image processed by the image processor is displayed on a display device connected to the information display processing device.

2. The information display processing device according to claim 1, further comprising:

an operation conversion portion that is connected to a user interface accepting a user's operation,
wherein when the operation conversion portion acquires operation information inputted from the user interface, the operation conversion portion converts the operation information into operation for the video signal acquired by the image input part.

3. The information display processing device according to claim 1, further comprising:

an external terminal information management portion that manages the image section to be highlighted on the display device,
wherein the image detector detects the image section by referring to the image section to be highlighted which is managed by the external terminal information management portion.

4. The information display processing device according to claim 3, further comprising:

an operation conversion portion that is connected to a user interface accepting a user's operation and that converts operation information inputted from the user interface,

wherein the image detector registers position coordinates where the image to be highlighted is detected and the size of the image in the external terminal information management portion;

wherein the image processor registers position coordinates of the image after highlighting of the image to be highlighted and the size of the image in the external terminal information management portion; and

wherein the operation conversion portion converts the operation information for the image section after highlighting of the image to be highlighted into operation information before highlighting of the image section to be highlighted based on the position coordinates where the image section to be highlighted which is managed by the external terminal information management portion is detected and the size of the image and the position coordinates of the image section after highlighting of the image to be highlighted and the size of the image.

5. An information display processing device comprising:

an image input part that acquires a video signal outputted from an external terminal;
an image detector that detects an image section to be detected from an image indicated by the video signal acquired by the image input part;
an operation conversion portion that generates operation information for the image section and converts the operation information into operation for the video signal acquired by the image input part; and
an image display processor that performs processing so that the image inputted from the image input part is displayed on a display device connected to the information display processing device.

FIG. 1

# FIG. 2

FIG. 3

(a)

(b)

## FIG. 4

| | TYPE | ITEM | FORMAT | EXAMPLE 1 (205) | EXAMPLE 2 (206) | EXAMPLE 3 (207) | |
|---|---|---|---|---|---|---|---|
| 201 | APPLICATION | APPLICATION NAME | STRING | Navi | Music | Movie | PRESET |
| | | APPLICATION TYPE | STRING | NAVIGATION | AUDIO | VIDEO | |
| | | ACTIVE | O OR X | X | X | X | |
| 202 | ICON | IMAGE DATA | DATA | … | … | … | |
| | | SIZE (w, h) | (w, h) | 72 x 72 | 72 x 72 | 72 x 72 | |
| 203 | INPUT IMAGE | SIZE (w, h) | (wi, hi) | 72 x 72 | 72 x 72 | - | UPDATED BY IMAGE DETECTOR (128) |
| | | POSITION (x, y) | (xi, yi) | 14 x 116 | 130 x 260 | - | |
| | | WITH OR WITHOUT | O OR X | O | O | X | |
| 204 | DISPLAY IMAGE | SIZE (w, h) | (wd, hd) | 144 x 144 | 144 x 144 | - | UPDATED BY IMAGE PROCESSOR (122) |
| | | POSITION (x, y) | (xd, yd) | 14 x 116 | 252 x 116 | - | |
| | | WITH OR WITHOUT | O OR X | O | O | X | |

## FIG. 5

IMAGE DETECTOR (128)
START

CONVERT VIDEO SIGNAL INTO IMAGE — S301

DETECT ICONS OF SPECIFIC
APPLICATIONS FROM IMAGE — S303

STORE DETECTED INFORMATION IN
EXTERNAL TERMINAL INFORMATION — S305
MANAGEMENT PORTION (129)

END

FIG. 6

# FIG. 7

(a)

720

(b)

Navi
730

# FIG. 8

```
        ╭─────────────────────────────╮
        │   IMAGE PROCESSOR (122)      │
        │         START               │
        ╰─────────────────────────────╯
                     │
                     ▼
   ┌─────────────────────────────────────┐
   │  ACQUIRE SCREEN SIZE INDICATED BY    │──── S401
   │  VIDEO SIGNAL AND PROCESS MENU IMAGE │
   └─────────────────────────────────────┘
                     │
                     ▼
   ┌─────────────────────────────────────┐
   │  ACQUIRE INFORMATION OF ICONS        │
   │  INCLUDED IN INPUT IMAGE FROM        │──── S402
   │  EXTERNAL TERMINAL INFORMATION       │
   │  MANAGEMENT PORTION (129)            │
   └─────────────────────────────────────┘
                     │
                     ▼
   ┌─────────────────────────────────────┐
   │  CONVERT (ENLARGE) SIZE OF EACH ICON │──── S403
   │  AND ARRANGE ICON ON MENU IMAGE      │
   └─────────────────────────────────────┘
                     │
                     ▼
   ┌─────────────────────────────────────┐
   │  STORE CONVERTED SIZE OF ICON AND    │
   │  POSITION OF ICON ON MENU IMAGE IN   │──── S404
   │  EXTERNAL TERMINAL INFORMATION       │
   │  MANAGEMENT PORTION (129)            │
   └─────────────────────────────────────┘
                     │
                     ▼
               ╭───────────╮
               │    END    │
               ╰───────────╯
```

# FIG. 9

```
┌─────────────────────────────────────┐
│  OPERATION CONVERSION PORTION (125)  │
│               START                  │
└─────────────────────────────────────┘
                   │
                   ▼
┌─────────────────────────────────────┐
│  ACQUIRE INFORMATION OF OPERATION    │ ─── S501
│  PERFORMED ON USER INTERFACE (124)   │
└─────────────────────────────────────┘
                   │
                   ▼
┌─────────────────────────────────────┐
│  SEARCH EXTERNAL TERMINAL INFORMATION│
│  MANAGEMENT PORTION (129) FOR ICON   │ ─── S502
│  AS OBJECT OF OPERATION INFORMATION  │
└─────────────────────────────────────┘
                   │
   S503            ▼
  ┌────────────────────────────────┐  NO
  │       ICON IS OPERATED?        │ ──────┐
  └────────────────────────────────┘       │
                 YES │                      │
                     ▼                      │
┌─────────────────────────────────────┐    │
│  CALCULATE POSITION RELATIVE TO      │    │
│  POSITION INDICATED BY OPERATION     │ ── S504
│  INFORMATION FOR ICON                │    │
└─────────────────────────────────────┘    │
                   │                        │
                   ▼                        │
┌─────────────────────────────────────┐    │
│  CONVERT RELATIVE POSITION TO        │    │
│  ORIGINAL POSITION ON MENU SCREEN    │ ── S505
│  INDICATED BY VIDEO SIGNAL           │    │
└─────────────────────────────────────┘    │
                   │                        │
                   ▼                        │
┌─────────────────────────────────────┐    │
│  SEND INFORMATION INDICATING         │    │
│  CONVERTED POSITION TO OPERATION     │ ── S506
│  OUTPUT PORTION (126)                │    │
└─────────────────────────────────────┘    │
                   │◄───────────────────────┘
                   ▼
              ┌─────────┐
              │   END   │
              └─────────┘
```

## FIG. 10

# FIG. 11

## FIG. 12

FIG. 13

## FIG. 14

1401

1402

Do you want to start Navi?

| Yes | No |

1403

Tool 1    Tool 2    Tool 3    Tool 4    Tool 5

12:00

## FIG. 15

EP 2 777 990 A1

FIG. 16

Flowchart showing interactions between IMAGE PROCESSOR (122), OPERATION CONVERSION PORTION (125), and IMAGE DETECTOR (128):

- IMAGE PROCESSOR (122): OUTPUT IMAGE INDICATED BY VIDEO SIGNAL AS IT IS (S1121)
- OPERATION CONVERSION PORTION (125): WAIT FOR OPERATION (S1101) → THERE IS SPECIFIC APPLICATION DETECTED? (S1102)
  - NO → OUTPUT OPERATION INFORMATION AS IT IS (S1105) → THERE IS INSTRUCTION TO TERMINATE CONVERSION? (S1106); NO loops back, YES
  - YES → GENERATE OPERATION INFORMATION (S1603) → CONVERT OPERATION INFORMATION (S1104)
- IMAGE DETECTOR (128): DETECT IMAGE (S1111) → END
- S1131, S1132, S1134

**INTERNATIONAL SEARCH REPORT**

| International application No. |
|---|
| PCT/JP2012/006824 |

A. CLASSIFICATION OF SUBJECT MATTER
*B60R16/02*(2006.01)i, *G01C21/26*(2006.01)i

According to International Patent Classification (IPC) or to both national classification and IPC

B. FIELDS SEARCHED

Minimum documentation searched (classification system followed by classification symbols)
B60R16/02, G01C21/26

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2010-122128 A (Xanavi Informatics Corp.),<br>03 June 2010 (03.06.2010),<br>entire text; all drawings<br>(Family: none) | 1-3<br>4-5 |
| X<br>Y<br>A | JP 2010-126092 A (Fujitsu Ten Ltd.),<br>10 June 2010 (10.06.2010),<br>entire text; all drawings<br>(Family: none) | 5<br>1-3<br>4 |
| A | JP 2006-155275 A (Denso IT Laboratory, Inc.),<br>15 June 2006 (15.06.2006),<br>entire text; all drawings<br>(Family: none) | 1-5 |

☐ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>03 December, 2012 (03.12.12) | Date of mailing of the international search report<br>11 December, 2012 (11.12.12) |
|---|---|
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010514604 T

- JP 2011244827 A